Europäisches Patentamt

European Patent Office

Office européen des brevets

(19)

(11) Publication number: **0 079 506**
**A1**

## EUROPEAN PATENT APPLICATION

(12)

(21) Application number: **82110036.9**

(22) Date of filing: **29.10.82**

(51) Int. Cl.³: **C 08 L 23/12**
**C 08 K 5/09, C 08 K 5/20**

(30) Priority: **11.11.81 JP 180728/81**

(43) Date of publication of application:
**25.05.83 Bulletin 83/21**

(84) Designated Contracting States:
**DE FR GB IT**

(71) Applicant: **MITSUBISHI CHEMICAL INDUSTRIES LIMITED**
**5-2, Marunouchi 2-chome Chiyoda-ku**
**Tokyo 100(JP)**

(72) Inventor: **Arai, Toshiharu**
**1-32-24, Hiroe 3-Chome**
**Kurashiki-Shi Okayama-Ken(JP)**

(72) Inventor: **Uchida, Masaaki**
**1-44-24, Hiroe 3-Chome**
**Kurashiki-Shi Okayama-Ken(JP)**

(72) Inventor: **Yoshioka, Tsunemi**
**1446-10, Mizue**
**Kurashiki-Shi Okayama-Ken(JP)**

(74) Representative: **Baillie, Iain Cameron et al,**
**c/o Ladas & Parry Isartorplatz 5**
**D-8000 München 2(DE)**

(54) Polypropylene resin composition.

(57) A polypropylene resin composition containing (a) an aliphatic carboxylic acid amide and (b) an aromatic carboxylic acid or derivatives thereof, has excellent moldability and quite useful for producing thin wall moldings such as a lightweight package by a high-speed molding.

.TITLE :
see front page

Field of the invention

This invention relates to a novel polypropylene resin composition useful for thin wall injection molding.

Description of the prior art

A polypropylene resin has been widely used for producing containers, as it is light in weight and has good stiffness, heat-resistance and moldability.

Recently, upon those good characteristics, thin wall containers by injection molding has been prevalent especially in the field of food packaging.

A grade of resin called a high-flow grade is usually used in said field in order to achieve high productivity.

However, there have been such disadvantages among those known grades of polypropylene resin that (1) resulting moldings frequently do not have good flatness because of sink marks in the end part of the moldings, which is caused by molding polypropylene, which is essentially a crystalline resin, in high speed molding to obtain thin wall moldings, and (2) stringiness and cracks tend to occur around the gates because of inferior moldability in the gate part, which bring about bad finish.

The finish of the flat part of the moldings is quite important for the fitting and sealing with caps in packaging containers.

The finish around the gate is also practically quite important not only in appearance but also in strength during the practical use of the moldings.

Though these drawbacks can be avoided by some changes of the molding conditions, such changes always cause a deterioration in the productivity.

For instance, an elevation of the injection pressure so as to improve flatness causes an increase of flash or a bad release of the moldings according to the adhesion on the core of the mold.

3

Further, a lowering of resin temperature so as to avoid stringiness causes microcracks.

Thus, a resin having a totally good molding characteristics has long been expected in the field.

It has been known that such finish concerning flatness as sink mark can be improved to some extent by blending a nucleating agent.

However, it has not been a substantial improving method because a necessary injection pressure must be raised in order to compensate the lowering of resin flowability in the mold caused by the blending and it also causes bad release.

Summary of the invention

The present invention relates to a polypropylene resin composition, which comprises containing (a) an amide of an aliphatic carboxylic acid and (b) an aromatic carboxylic acid or derivatives thereof.

Brief description of the invention

In the present invention, an amide of an aliphatic carboxylic acid can be an amide of a saturated or unsaturated fatty acid such as oleic acid amide, stearic acid amide, erucic acid amide, etc., which has a melting point ranging from 60 to 110°C.

If the melting point is higher than 110°C, the amide does not sufficiently bleed on the surface of the resin because of a bad co-solubility with polypropylene.

If the melting point is lower than 60°C, too much amount of bleed comes out to cause smears on the surface of the mold.

The amide of an aliphatic carboxylic acid is usually blended at a ratio ranging from 0.01 to 1, preferably from 0.05 to 0.5% by weight to the polypropylene resin.

Aromatic carboxylic acid can be an acid having the structure with carboxyl group bonding directly to aromatic nuclei such as benzoic acid, p-toluic acid, o-toluic acid, p-isopropyl benzoic acid, p-tert-butyl benzoic acid, o-tert-butyl benzoic acid chlorbenzoic acid, hydroxy benzoic acid, nitro benzoic acid, etc. or a carboxylic acid having a nuclei in the molecule such as monophenyl acetic acid, diphenyl acetic acid, etc.

Further, polycarboxylic acids such as phthalic acid, isophthalic acid, terephthalic acid and trimeritic acid, etc. can be used.

The derivatives of aromatic carboxylic acid can be a metal salt and an anhydride. The metalic salt can be litium salt, sodium salt, magnesium salt, potassium salt, barium salt, aluminum salt, titanium salt or chromium salt.

The anhydride can be phthalic anhydride, trimeritic anhydride, etc.

The aromatic acid or the derivatives thereof is usually blended to the polypropylene resin by an amount ranging from 0.01 to 1, preferably from 0.05 to 0.5% by weight.

These ingredients can be blended to polypropylene by a known method. For instance, they can be mixed with polypropylene by being added to the polypropylene powder or pellet and successively supplied to an extruder, a Banbury mixer, a Kneader, a mixing roll, etc. They can also be supplied as a master-batch with a resin to a molding machine to be blended.

A polypropylene used in this invention can be a homopolypropylene having a 89% or more, preferably 93% or more, Isotactic Index (II; the extract residue obtained by extracting resin with boiling n-hexane by Soxhlet extractor for 6 hours, which is shown by % by weight), a block-polypropylene or a random polypropylene co-polymerized with up to 10% by weight of other α-olefines, or mixtures thereof.

The Melt Flow Index (MFI) of the polypropylene is preferably in the range of from 15 to 60. If it is lower than 15, handling is difficult because of lower flowability and if higher than 60, the impact strength of the moldings decreases.

A homo-polypropylene having an MFI of from 15 to 40 or a propylene copolymer having an MFI of from 20 to 60 are especially useful.

The polypropylene composition of this invention can be optionally blended with usually used additives such as an antioxidant, an ultraviolet absorbing agent, an antistatic agent, a lubricant, a pigment, etc.

The polypropylene composition of this invention has an excellent flowability and moldability, and the moldings obtained has excellent appearance.

Thus, the composition is industrially quite useful for thin wall injection molding.

The thin wall moldings of this invention means a moldings which satisfy the following conditions,

$$t < 0.1$$

$$1/t^{1.6} > 250$$

$$1/t^{1.6} > 300, \text{ preferably}$$

(wherein t is a wall thickness of the molding and above equations are those in the case that the distance between the gate and the end of the flow is 1 cm.)

The high-speed molding of this invention means a condition in which light-weight packages defined above are molded in a molding speed of more than 250 shots per hour, preferably 300 shots per hour.

The present invention is further described by the following examples, but they are not shown for restricting the invention.

The molding conditions and the methods for testing the moldings are shown below.

A.  Molding conditions

Molding machine:    Nestal 350/120 A (Sumitomo Heavy Machine Industries

                    Ltd.)

Mold:               · Diameter              65 mm

                    · Height                65 mm

                    · Average wall thickness    0.6 mm

                    · Six-cavity mold

Resin temperature:  275°C Molding Cycle:      8.0 second   (450 shots per hour)

B.  Testing method

(1)  $P_C$ :  the minimum filling pressure, shown by an oil

             pressure ($kg/cm^2$); $P_C$ represents the flowability

             of resin while molding (the resin showing a

lower $P_C$ value has a better flowability.)

(2)  $P_A$ :  the critical injection pressure under which an off pressure is recognized in the clamping mechanism of the molding machine while the mold release.

(3)  Releasability:  the differential pressure between

$P_C$ and $P_A$; the larger the differential pressure, the better the releasability.

(4)  Sink Mark:  the flatness finish in the flange part of the moldings, evaluated by observing the appearance.

(5)  Stringiness:  the finish in the gate part of the moldings, evaluated by observing the appearance.

(6)  Crack:  the finish in the gate part of the moldings, evaluated by observing the appearance.

(7)  Flash:  the finish in the flange part of the moldings, evaluated by observing the appearance.

Sink Mark, Stringiness, Crack and Flash are all shown by six grades of $\bigcirc$, $\bigcirc\triangle$, $\triangle$, $\triangle$X, X and XX according to the order of goodness.

Example 1 - 4 and Reference 1 - 5

The additives shown in the Table 1 and 0.1% by weight of Irganox 1010 (Ciba-Geigy) as an antioxidant were dry-blended to 100 part by weight of powder polypropylene having the Melt Flow Index of 19.

The obtained blend was charged into the 40∅ single-screw extruder so as to be kneaded and granulated to prepare polypropylene resin composition, which was served as the samples. Using these samples, the molding for producing pudding cups was conducted and various kinds of moldability were evaluated; the results are shown in the Table 2.

Example 5

The additives shown in the Table 1 were blended to 100 part by weight of the propylene-ethylene block copolymer (ethylene content 5% by weight) having the Melt Flow Index of 45, samples were prepared in the similar manner as in the Example 1 - 4 and moldability was evaluated: the results are shown in the Table 2.

Table 1

Dimension: Part by weight per polymer 100 part by weight

| | Melt Flow Index of the polypropylene resin | Additives | | | | | | |
|---|---|---|---|---|---|---|---|---|
| | | Oleyl -amide | Stearyl -amide | Aluminum p-tert -butyl benzoate | Sodium benzoate | Benzoic acid | SiO$_2$ | Potassium stearate |
| Example 1 | 19 | 0.1 | – | 0.05 | – | – | – | 0.1 |
| " 2 | 19 | – | 0.15 | 0.05 | – | – | – | 0.1 |
| " 3 | 19 | 0.1 | – | – | 0.05 | – | – | – |
| " 4 | 19 | 0.05 | – | – | – | 0.05 | – | 0.1 |
| Reference 1 | 19 | – | – | – | – | – | – | 0.1 |
| " 2 | 19 | 0.2 | – | – | – | – | – | 0.1 |
| " 3 | 19 | – | 0.2 | – | – | – | – | 0.1 |
| " 4 | 19 | – | – | 0.15 | – | – | – | 0.1 |
| " 5 | 19 | – | – | – | – | – | 0.2 | 0.1 |
| Example 5 | 45 | 0.07 | – | 0.05 | – | – | – | 0.1 |

Table 2

| | $P_C$ (Kg/cm$^2$) | $P_A$ (Kg/cm$^2$) | Releasability | Sink Mark | Stringiness | Crack | Flash |
|---|---|---|---|---|---|---|---|
| Example 1 | 111 | 128 | ○ | ○ | ○ | ○ | ○ |
| 2 | 112 | 127 | ○ | ○ | ○ | ○ | ○ |
| 3 | 111 | 128 | ○ | ○ | ○ | ○ | ○ |
| 4 | 111 | 130 | ○ | ○ | ○△ | ○△ | ○ |
| Reference 1 | 115 | 120 | X | XX | △X | △ | ○△ |
| 2 | 110 | 138 | ○ | △X | X | ○△ | ○△ |
| 3 | 112 | 129 | ○ | △X | X | ○△ | ○△ |
| 4 | 117 | 117 | XX | ○ | ○ | △ | ○ |
| 5 | 115 | 115 | XX | △X | △X | △ | ○ |
| Example 5 | 90 | 115 | ○ | ○ | ○ | ○ | ○ |

Claims

1. A polypropylene resin composition obtained by blending a polypropylene with (a) an aliphatic carboxylic acid amide and (b) an aromatic carboxylic acid or derivatives thereof.

2. A polypropylene resin composition according to claim 1, wherein the Melt Flow Index of said polypropylene is within the range of from 15 to 60.

3. A polypropylene resin composition according to claim 1, wherein said derivatives of aromatic carboxylic acid is a metalic salt of aromatic carboxylic acid.

4. A polypropylene resin composition according to claim 1, wherein from 0.01 to 1% by weight of an aliphatic carboxylic acid amide and from 0.01 to 1% by weight of an aromatic carboxylic acid or derivatives thereof are blended to the polypropylene.

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | PATENTS ABSTRACTS OF JAPAN, vol. 3, no. 27(C-39), 7th March 1979, page 16 C39; & JP - A - 54 51 (HITACHI SEISAKUSHO K.K.) (01-05-1979) | 1-4 | C 08 L 23/12 C 08 K 5/09 C 08 K 5/20 |
| | --- | | |
| A | FR-A-2 245 472 (MITSUI TOATSU) *Claims 1-4* | 1 | |
| | ----- | | |

|  |
|---|
| TECHNICAL FIELDS SEARCHED (Int. Cl. ³) |
| C 08 L C 08 K |

The present search report has been drawn up for all claims

| Place of search THE HAGUE | Date of completion of the search 03-03-1983 | Examiner GOOVAERTS R.E. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82